# FASCICULE DE BREVET EUROPEEN

(11) **EP 1 046 858 B1**
(45) Date de publication et mention de la délivrance du brevet: **05.07.2006**
(21) Numéro de dépôt: 00401063.3
(22) Date de dépôt: 17.04.2000
(51) Int. Cl.: F17C 13/02, F25J 1/02

(54) **Procédé et dispositif de maintien en froid de réservoirs de stockage ou de transport d'un gaz liquéfié**
Verfahren und Vorrichtung zum Kühlhalten von Behältern zur Lagerung und zum Transport verflüssigter Gase
Method and apparatus for keeping containers for storing and transporting liquefied gas cold

(30) Priorité: 20.04.1999 FR 9904949
(43) Date de publication de la demande: 25.10.2000
(73) Titulaire: GAZ DE FRANCE, 75017 Paris (FR)
(72) Inventeur: Raillard, Jean-Christophe, 44340 Bouguenais (FR); Flesch, Emmanuel, 44880 Sautron (FR); Doyer, Henri, 44000 Nantes (FR)
(74) Mandataire: Thévenet, Jean-Bruno

(56) Documents cités:
- DE-A- 2 260 516
- US-A- 3 733 838
- US-A- 3 857 245
- US-A- 4 249 387

## Description

### Domaine de l'invention

La présente invention se rapporte au domaine général du stockage et du transport de gaz liquéfiés et elle concerne plus particulièrement un procédé pour le maintien en froid des réservoirs contenant ces gaz liquéfiés et le dispositif correspondant pour sa mise en oeuvre.

### Art antérieur

Il est connu d'effectuer le stockage et le transport de certains gaz sous une forme liquide à très basse température et à une pression voisine de la pression atmosphérique. Or, les réservoirs dans lesquels ces gaz liquéfiés sont stockés et transportés ne peuvent être complètement et parfaitement isolés et ils supportent donc des pertes thermiques. Il en résulte une évaporation du liquide qui va engendrer une surpression dans les réservoirs, laquelle en devenant rapidement inacceptable va obliger à une évacuation du gaz évaporé.

Différentes solutions à ce problème d'évaporation ont donc dû être envisagées notamment lors du transport de ce gaz liquéfié. Ainsi, sur les navires méthaniers équipés d'une propulsion vapeur, le gaz d'évaporation est évacué des réservoirs de stockage, réchauffé et brûlé dans des chaudières qui alimentent directement un circuit vapeur qui va entraîner l'hélice de propulsion du navire via un réducteur approprié.

Malheureusement, la propulsion vapeur tend aujourd'hui à disparaître et elle est remplacée de plus en plus par des modes de propulsion présentant un plus grand rendement énergétique, comme la propulsion diesel. Aussi, il existe différents projets visant à effectuer le traitement des gaz d'évaporation indépendamment de la propulsion du navire par des dispositifs tendant à supprimer ces évaporations par d'autres moyens.

Par exemple, il est connu de reliquéfier les gaz d'évaporation et de les réinjecter ensuite dans le réservoir d'où ils sont issus. Toutefois, cette méthode suppose l'emploi d'une unité de reliquéfaction d'autant plus complexe et coûteuse que les gaz liquéfiés stockés et transportés ne sont généralement pas purs et que leurs vapeurs contiennent des composants incondensables qui doivent faire l'objet d'un traitement spécifique et d'une purge a l'atmosphère qui présente des inconvénients du point de vue de la sécurité et de la protection de l'environnement.

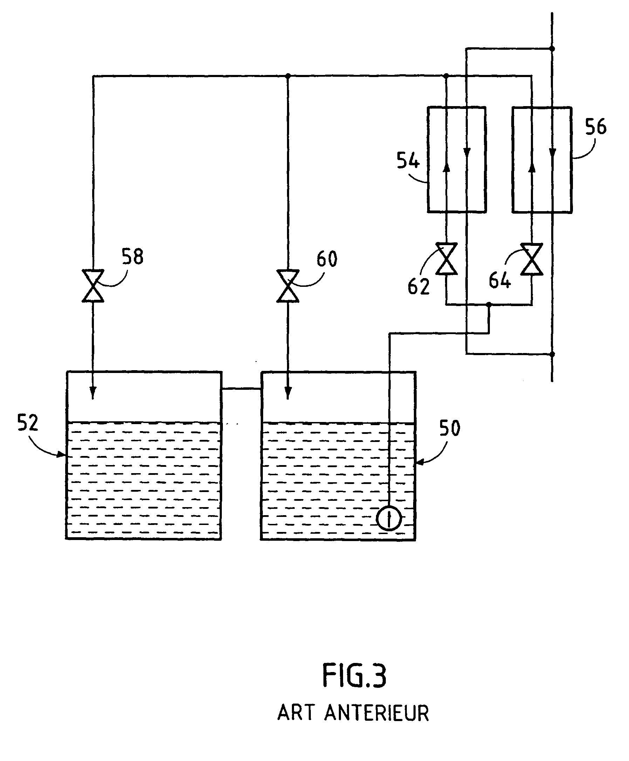

Une autre solution consiste non plus à reliquéfier le gaz évaporé mais à réfrigérer légèrement directement le gaz liquéfié. Le brevet US 3 918 265, considéré comme reflétant l'art antérieur le plus proche, illustre un dispositif susceptible de permettre ce maintien en froid des réservoirs comme représenté sur la figure 3. Si l'on se réfère à la figure 3, on voit un système dans lequel on prélève par pompage le gaz liquéfié d'un réservoir 50 puis on sous-refroidit le gaz liquéfié ainsi prélevé dans un ou plusieurs échangeurs de chaleur 54, 56 et on réinjecte dans le réservoir 50 et éventuellement dans d'autres réservoirs 52 le gaz liquéfié prélevé ainsi sous-refroidi. Des vannes 58, 60, 62, 64 assurent une régulation des différents fluides circulant dans le dispositif.

Cette solution peut s'avérer satisfaisante pour assurer un contrôle des montées lentes en pression du gaz liquéfié, c'est à dire à long terme (qui peuvent être évaluées de l'ordre de 10mbar/h dans le cas du GNL). Toutefois, il apparaît qu'elle n'est pas suffisante pour se garantir contre des montées rapides en pression dues par exemple à un mauvais état d'équilibre thermodynamique initial du gaz liquéfié introduit dans la cuve ou un mauvais état de mise en froid du réservoir. Plus particulièrement, lors du transport de gaz liquéfié par mer (par exemple à bord d'un navire méthanier pour le GNL), des conditions de navigation difficiles peuvent amener des évaporations instantanées qui se traduisent par des montées rapides de pression pouvant aller jusqu'à 10mbar/min sur des durées pouvant aller jusqu'à plusieurs minutes.

### Objet et définition de l'invention

La présente invention se propose donc de pallier les inconvénients précités en proposant un procédé de maintien en froid de réservoirs de stockage et de transport de gaz liquéfié qui assure une parfaite gestion des montées en pression lentes et rapides. Un but de l'invention est aussi de proposer un dispositif pour mettre en oeuvre ce procédé qui soit simple et économique et réponde notamment mieux aux normes actuelles en matière de pollution que ceux actuellement connus.

A cet effet, l'invention a pour objet un procédé de maintien en froid d'au moins un réservoir de stockage ou de transport d'un gaz liquéfié dans lequel on prélève par pompage une partie de ce gaz liquéfié dans le réservoir puis on sous-refroidit le gaz liquéfié ainsi prélevé dans un système d'échange de chaleur et on réinjecte sélectivement dans le réservoir le gaz liquéfié ainsi sous-refroidi, caractérisé en ce qu'on prélève en outre par intermittence une partie d'un gaz d'évaporation de ce réservoir, on comprime le gaz d'évaporation ainsi prélevé dans un compresseur et on injecte ce gaz d'évaporation prélevé ainsi comprimé dans le gaz liquéfié prélevé pour former un mélange qui est alors pleinement liquéfié et sous-refroidi dans le système d'échange de chaleur. Selon l'invention, on met en oeuvre un système d'échange de chaleur conçu pour traiter un fluide à refroidir principalement liquide en entrée.

Le mélange liquide/gaz comprimé injecté dans le système d'échange de chaleur comporte un titre liquide molaire de 50% à 100%, de préférence de 70% à 100%.

L'injection après compression du gaz d'évaporation dans le flux du gaz liquéfié permet une meilleure gestion des montées en pression qu'elles soient lentes ou rapides.

Le procédé selon l'invention peut être appliqué à un ensemble de plusieurs réservoirs. Dans ce cas, le mélange liquide/gaz comprimé est prélevé dans au moins un réservoir et après avoir été pleinement liquéfié et sous-refroidi dans le système d'échange de chaleur est réinjecté dans au moins l'un des réservoirs.

L'invention concerne également un dispositif pour la mise en oeuvre du procédé comportant d'une part au moins un réservoir d'un gaz liquéfié contenant une phase liquide (LIQ) et une phase gazeuse (BOG) et d'autre part un système d'échangeur de chaleur dont l'entrée communique avec le réservoir au niveau de sa phase liquide via un système de pompage et une canalisation de soutirage de liquide, et dont la sortie communique avec le réservoir après passage au travers d'une vanne de régulation, caractérisé en ce qu'il comporte en outre un compresseur dont une entrée communique avec le réservoir au niveau de sa phase gazeuse et dont la sortie communique avec la canalisation de soutirage du liquide via un système d'injection à l'entrée du système de l'échangeur de chaleur, de telle sorte qu'un mélange pleinement liquéfié et sous-refroidi soit réintroduit dans le réservoir pour en refroidir le contenu et ainsi contrôler les montées en pression.

Avantageusement ce système d'échangeur de chaleur comprend un échangeur de chaleur conçu pour traiter un fluide à refroidir principalement liquide en entrée.

De préférence, le mélange liquide/gaz comprimé injecté dans le système d'échangeur de chaleur comporte un titre liquide molaire de 50% à 100%, de préférence de 70% à 100%.

Le système d'échangeur de chaleur peut être traversé par un fluide de refroidissement, tel que de l'azote gazeux ou un mélange de produits issus du réservoir. Il est avantageusement configuré pour assurer un refroidissement du mélange liquide/gaz comprimé injecté de 1°C à 20°C, de préférence de 3°C à 17°C.

Le mélange pleinement liquéfié et sous-refroidi issu du système d'échangeur de chaleur est réinjecté dans le réservoir au niveau de la phase gazeuse (BOG) et/ou au niveau de la phase liquide (LIQ).

Selon une variante avantageuse du dispositif selon l'invention, celui-ci comporte en outre une capacité de stockage intermédiaire disposée sur une canalisation de retour vers le réservoir du mélange pleinement liquéfié et sous-refroidi, entre la sortie du système d'échangeur de chaleur et la vanne de régulation.

On notera que le gaz liquéfié auquel s'applique l'invention peut être constitué par un gaz disponible sous une forme liquide en dessous de la température ambiante, comme le gaz naturel liquéfié (GNL), le gaz de pétrole liquéfié (GPL), l'ammoniac, l'hydrogène, etc. L'invention s'applique de façon particulièrement avantageuse aux gaz non disponibles sous une forme liquide, quelle que soit la pression, à la température standard de 15°, comme le gaz naturel ou l'hydrogène par exemple.

Dans le cas où le gaz liquéfié est constitué par du gaz de pétrole liquéfié (GPL), le système d'échangeur de chaleur peut être traversé par un fluide de refroidissement tel que du propylène, un fréon, un HCFC ou des produits issus du réservoir.

### Brève description des dessins

Les caractéristiques et avantages de la présente invention ressortiront mieux de la description suivante, faite à titre indicatif et non limitatif, en regard des dessins annexés sur lesquels:
- la figure 1 est un schéma de principe d'un dispositif de stockage ou de transport de gaz liquéfié selon l'invention,
- la figure 2 est une variante de réalisation du dispositif de la figure 1, et
- la figure 3 montre un dispositif de l'art antérieur permettant le contrôle des montées lentes en pression des réservoirs de gaz liquéfiés.

### Description détaillée d'un mode de réalisation préférentiel

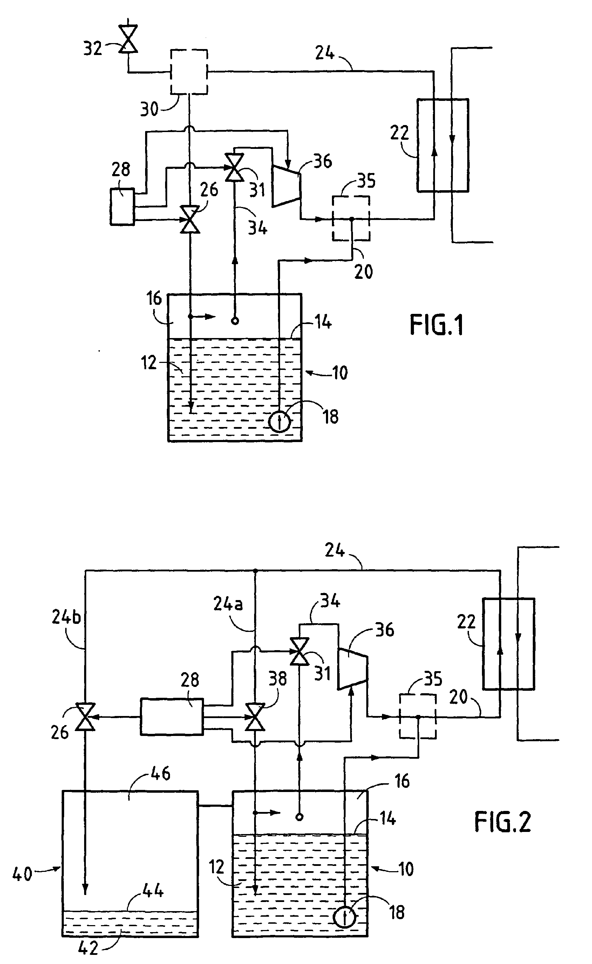

La figure 1 illustre un dispositif de stockage ou de transport d'un gaz liquéfié, tel que du gaz naturel liquéfié (GNL), conforme à l'invention. Ce dispositif comporte un réservoir ou cuve 10 contenant une phase liquide (LIQ) 12 et une phase gazeuse. De manière connue en soi, ce réservoir est pourvu de différentes structures d'isolation thermique non représentées permettant de limiter les pertes thermiques auxquelles sont soumis le liquide et le gaz qui y sont stockés. Au dessus de la surface de séparation du liquide 14 existe un espace complémentaire 16 contenant la phase gazeuse du stockage constituée de gaz d'évaporation (Boil Off Gas BOG). Un système de pompage 18, disposé à l'intérieur de ce réservoir au niveau de sa phase liquide 12, sensiblement à sa partie inférieure (le fond de la cuve), mais qui peut éventuellement être aussi disposé à un autre endroit, y compris à l'extérieur du réservoir 10, est relié à une première extrémité d'une canalisation aller 20 de soutirage de liquide dont l'autre extrémité est reliée à une première entrée d'un échangeur de chaleur 22 qui est traversé entre une seconde entrée et une seconde sortie par un fluide de refroidissement (fluide frigorigène), par exemple de l'azote gazeux ou un mélange de produits issus de la cuve. Une première sortie de cet échangeur 22 est reliée à une première extrémité d'une canalisation retour 24 dont la seconde extrémité est plongée dans le réservoir 10 (au niveau du LIQ et/ou au niveau du BOG selon notamment le niveau de remplissage du réservoir) après passage au travers d'une vanne de régulation 26.

Selon l'invention, le dispositif comporte en outre une seconde canalisation 34, dont une extrémité est en communication avec l'intérieur du réservoir 10 au niveau de sa phase gazeuse 16, sensiblement à sa partie supérieure (le sommet de la cuve), l'autre extrémité étant reliée à l'entrée d'un compresseur 36 après passage au travers d'une vanne 31. Le compresseur 36 peut être associé à des systèmes de refroidissement. La sortie du compresseur 36 communique avec la canalisation 20 de soutirage de liquide via un système d'injection 35.

La commande des vannes de régulation 26 et 31, et du compresseur 36 est assurée par un dispositif de commande approprié 28 de telle sorte que le liquide réintroduit dans le réservoir et l'aspiration intermittente de la phase gazeuse 16 permettent de contrôler dans le temps la pression du réservoir, le sous-refroidissement du liquide réintroduit s'opposant aux pertes thermiques à l'origine du réchauffement du liquide 12 et de la vapeur 16. Une capacité de stockage intermédiaire 30 peut être disposée sur la canalisation de retour 24 vers le réservoir 10 entre la sortie de l'échangeur 22 et la vanne de régulation 26 pour, en assurant une réserve calorifique de liquide refroidi, procurer une plus grande souplesse d'exploitation au dispositif. Notamment, l'adjonction d'une vanne 32 permettra l'extraction éventuelle de la phase vapeur contenue dans la capacité de stockage intermédiaire 30.

Le procédé mis en oeuvre dans le dispositif selon l'invention consiste tout d'abord à prélever avec la pompe 18 une partie du LIQ 12 qui est dirigé par la canalisation aller 20 vers l'échangeur de chaleur 22 au niveau duquel il est sous-refroidi par le passage du fluide de refroidissement provenant du système de réfrigération externe. En sortie de cet échangeur, le liquide sous-refroidi est dirigé par la canalisation retour 24 vers le réservoir 10 dans lequel il est réinjecté sélectivement, directement ou après un éventuel stockage intermédiaire dans la capacité 30. Cette seule circulation de liquide refroidi permet de gérer très simplement les montées en pression lentes. Ainsi, par exemple, pour un navire méthanier de 135 000 m³ transportant du GNL relativement chargé en azote (environ 1,2% mole dans le liquide), un maintien en froid peut être assuré par un débit de GNL de quelques centaines de m³/h sous-refroidi d'une valeur comprise entre 1°C et 20°C (de préférence entre 3°C et 17°C). Plus précisément, un débit de GNL de 150m³/h et un sous refroidissement de 11°C avant la réinjection du liquide dans le réservoir assurent parfaitement cette fonction de maintien en froid à long terme sans aucun rejet dans l'atmosphère. Ce débit de circulation de GNL peut être obtenu simplement par une ou plusieurs pompes de recirculation (pompes de spray) ou éventuellement une pompe de déchargement qui classiquement équipe un navire méthanier.

Par contre, cette recirculation de liquide ne permet pas à elle seule de gérer les montées en pression rapides. A cet effet, le procédé décrit ci-dessus est amélioré en ce qu'il peut être procédé par intermittence au prélèvement d'une partie du BOG 16 qui est ensuite injecté après compression (au niveau du compresseur 36) via le système d'injection 35 dans le flux du GNL circulant dans la canalisation aller 20 et soumis au refroidissement de l'échangeur de chaleur 22. Le flux en entrée de l'échangeur est soit un flux liquide en cas de dilution totale du débit de BOG dans le flux de GNL soit plus généralement un flux liquide/vapeur majoritairement liquide, avec un titre molaire compris entre 50% et 100%, de préférence entre 70% et 100%. Dans ce dernier cas, l'échangeur sera bien entendu un échangeur thermique diphasique, toutefois de structure simplifiée du fait de la faible présence de vapeur. Ainsi, si l'on reprend l'exemple du méthanier précédent, on peut montrer que pallier une montée en pression de 10 mbar/min revient à injecter un débit de BOG de 2800 kg/h dans le flux liquide de 150 m3/h. Ce mélange, dont le titre liquide molaire est alors de 98%, est injecté dans l'échangeur où il est pleinement liquéfié et refroidi de 13° C, puis réinjecté dans le réservoir à une température de -177°C, soit une température supérieure à la température de cristallisation du méthane à pression atmosphérique qui est d'environ -182,6°C.

Avec la structure de l'invention, on obtient un excellent échange avec l'ensemble liquide/gaz évaporé (le « bulk ») du réservoir sans rejets à l'atmosphère préjudiciables. En outre, dans le cadre d'une utilisation à bord d'un navire, les équipements utilisés s'avèrent peu coûteux du fait de la possibilité de recourir comme mentionné précédemment à des éléments existants notamment les pompes ou les compresseurs du navire.

La figure 2 est une variante du dispositif de la figure 1 qui montre que le procédé de l'invention peut être appliqué également à un ensemble de réservoirs. En effet, à côté du premier réservoir 10 très fortement rempli (à 98% par exemple), on relève un second réservoir 40 faiblement rempli avec sa zone en phase liquide ou LIQ 42, sa surface de séparation liquide/gaz évaporé 44 et sa zone en phase gazeuse ou BOG 46. Entre ces deux réservoirs, un conduit 48 permet une communication des deux zones en phase gazeuse. On notera, que du fait du faible remplissage du second réservoir, la réinjection du mélange liquide/gaz comprimé sous-refroidi s'effectue nécessairement dans le gaz pour ce réservoir 40.

On notera que si les deux exemples de réalisation illustrés se rapportent plus particulièrement au stockage de gaz naturel liquéfié (GNL), il est évident que l'invention peut être mise en oeuvre pour tout type de gaz disponibles sous une forme liquide en dessous de la température ambiante, comme le gaz de pétrole liquéfié (GPL), l'ammoniac, l'hydrogène, etc.

## Revendications

1. Procédé de maintien en froid d'au moins un réservoir de stockage ou de transport d'un gaz liquéfié dans lequel on prélève par pompage (18) une partie de ce gaz liquéfié dans le réservoir (10) puis on sous-refroidit le gaz liquéfié ainsi prélevé dans un système d'échange de chaleur (22) et on réinjecte sélectivement dans le réservoir le gaz liquéfié ainsi sous-refroidi, **caractérisé en ce qu'**on prélève en outre par intermittence une partie d'un gaz d'évaporation (16) de ce réservoir, on comprime le gaz d'évaporation ainsi prélevé dans un compresseur (36) et on injecte ce gaz d'évaporation prélevé ainsi comprimé dans le gaz liquéfié prélevé pour former un mélange qui est alors pleinement liquéfié et sous-refroidi dans le système d'échange de chaleur.

2. Procédé selon la revendication 1, **caractérisé en ce que** l'on met en oeuvre un système d'échange de chaleur (22) conçu pour traiter un fluide à refroidir principalement liquide en entrée.

3. Procédé selon la revendication 2, **caractérisé en ce que** le mélange liquide/gaz comprimé injecté dans le système d'échange de chaleur (22) comporte un titre liquide molaire de 50% à 100%, de préférence de 70% à 100%.

4. Procédé selon l'une quelconque des revendications 1 à 3, **caractérisé en ce qu'**il est appliqué à un ensemble de plusieurs réservoirs (10, 40), **en ce que** le mélange liquide/gaz comprimé est prélevé dans au moins un réservoir (10) et après avoir été pleinement liquéfié et sous-refroidi dans le système d'échange de chaleur (22) est réinjecté dans au moins l'un des réservoirs (10, 40).

5. Dispositif pour la mise en oeuvre du procédé selon la revendication 1 comportant d'une part au moins un réservoir d'un gaz liquéfié (10, 40) contenant une phase liquide (LIQ 12) et une phase gazeuse (BOG 16) et d'autre part un système d'échangeur de chaleur (22) dont l'entrée communique avec le réservoir au niveau de sa phase liquide (LIQ 12) via un système de pompage (18) et une canalisation (20) de soutirage de liquide et dont la sortie communique avec le réservoir (10) après passage au travers d'une vanne de régulation (26), **caractérisé en ce qu'**il comporte en outre un compresseur (36) dont une entrée communique avec le réservoir (10) au niveau de sa phase gazeuse (BOG 16) et dont la sortie communique avec la canalisation (20) de soutirage du liquide via un système d'injection (35) à l'entrée de l'échangeur de chaleur (22), de telle sorte qu'un mélange pleinement liquéfié et sous-refroidi soit réintroduit dans le réservoir pour en refroidir le contenu et ainsi contrôler les montées en pression.

6. Dispositif selon la revendication 5, **caractérisé en ce que** le système d'échangeur de chaleur (22) comprend un échangeur de chaleur conçu pour traiter un fluide à refroidir principalement liquide en entrée.

7. Dispositif selon la revendication 6, **caractérisé en ce que** le mélange liquide/gaz comprimé injecté dans le système d'échangeur de chaleur (22) comporte un titre liquide molaire de 50% à 100%, de préférence de 70% à 100%.

8. Dispositif selon la revendication 5, **caractérisé en ce que** le système d'échangeur de chaleur (22) est traversé par un fluide de refroidissement, tel que de l'azote gazeux ou des produits issus du réservoir.

9. Dispositif selon la revendication 8, **caractérisé en ce que** le système d'échangeur de chaleur (22) est configuré pour assurer un refroidissement du mélange liquide/gaz comprimé injecté de 1°C à 20°C, de préférence de 3°C à 17°C.

10. Dispositif selon la revendication 5, **caractérisé en ce qu'**il comporte en outre une capacité de stockage intermédiaire (30) disposée sur une canalisation de retour (24) vers le réservoir (10) du mélange pleinement liquéfié et sous-refroidi, entre la sortie du système d'échangeur de chaleur (22) et la vanne de régulation (26).

11. Dispositif selon la revendication 5, **caractérisé en ce que** le mélange pleinement liquéfié et sous-refroidi issu du système d'échangeur de chaleur (22) est réinjecté dans le réservoir (10, 40) au niveau de sa phase liquide (LIQ 12) et/ou au niveau de sa phase gazeuse (BOG 16).

12. Dispositif selon l'une quelconque des revendications 5 à 11, **caractérisé en ce que** ledit gaz liquéfié est constitué par un gaz non disponible sous une forme liquide, quelle que soit la pression, à la température standard de 15°C, comme le gaz naturel liquéfié (GNL), ou l'hydrogène.

13. Dispositif selon l'une quelconque des revendications 5 à 7 et 10, 11, **caractérisé en ce que** le gaz liquéfié est constitué par du gaz de pétrole liquéfié (GPL).

14. Dispositif selon la revendication 13, **caractérisé en ce que** le système d'échangeur de chaleur (22) est traversé par un fluide de refroidissement tel que du propylène, un fréon, un HCFC ou des produits issus du réservoir.

## Claims

1. A method of keeping cold at least one tank for storing or transporting liquefied gas, in which method a portion of the liquefied gas in the tank (10) is extracted by pumping (18) and then the liquefied gas as extracted in this way is subcooled in a heat exchanger system (22) and the liquefied gas as subcooled in this way is selectively reinjected into the tank, the method being **characterised in that** a portion of vapour (16) in the tank is also extracted intermittently, the vapour extracted in this way is compressed in a compressor (36), and the extracted vapour as compressed in this way is injected into the extracted liquefied gas so as to form a mixture which is then fully liquefied and subcoooled in the heat exchanger system.

2. A method according to claim 1, **characterised in that** a heat exchanger system (22) is implemented which is designed to receive a fluid for cooling that is mainly liquid.

3. A method according to claim 2, **characterised in that** the compressed liquid/gas mixture injected into the heat exchanger system (22) has a liquid content in the range 50% to 100% molar, and preferably in the range 70% to 100% molar.

4. A method according to any one of claims 1 to 3, **characterised in that** it is applied to a set of a plurality of tanks (10, 40), **in that** the compressed liquid/gas mixture is taken from at least one of the tanks (10) and after being fully liquefied and subcooled in the heat exchanger system (22) is reinjected into at least one of the tanks (10, 40).

5. Apparatus for implementing the method according to claim 1, the apparatus comprising firstly at least one liquefied gas tank (10, 40) containing a liquid (LIQ 12) and a gas (BOG 16) and secondly a heat exchanger system (22) whose inlet communicates with the liquid level (LIQ 12) of the tank via a pumping system (18) and a liquid draw-off pipe (20), and whose outlet communicates with the tank (10) after passing through a regulating valve (26), the apparatus being **characterised in that** it further comprises a compressor (36) having an inlet communicating with the tank (10) in its gas level (BOG 16) and whose outlet communicates with the liquid draw-off pipe (20) via an injector system (35) at the inlet to the heat exchanger (22), in such a manner that a fully liquefied and subcooled mixture is reinserted into the tank to cool its content, thereby controlling pressure rises.

6. Apparatus according to claim 5, **characterised in that** the heat exchanger system (22) comprises a heat exchanger designed to receive a fluid for cooling that is mainly liquid.

7. Apparatus according to claim 6, **characterised in that** the compressed liquid/gas mixture injected into the heat exchanger system (22) has a liquid content lying in the range 50% to 100% molar, and preferably in the range 70% to 100% molar.

8. Apparatus according to claim 5, **characterised in that** the heat exchanger system (22) has a cooling fluid passing therethrough, such as gaseous nitrogen or substances taken from the tank.

9. Apparatus according to claim 8, **characterised in that** the heat exchanger system (22) is configured to cool the injected compressed liquid/gas mixture by 1°C to 20°C, and preferably by 3°C to 17°C.

10. Apparatus according to claim 5, **characterised in that** it further comprises an intermediate storage volume (30) disposed on a return pipe (24) for returning fully liquefied and subcooled mixture to the tank (10), the volume being located between the outlet from the heat exchanger system (22) and the regulating valve (26).

11. Apparatus according to claim 5, **characterised in that** the fully liquefied and subcooled mixture from the heat exchanger system (22) is reinjected into the tank (10, 40) in its liquid level (LIQ 12) and/or in its gas level (BOG 16).

12. Apparatus according to any one of claims 5 to 11, **characterised in that** said liquefied gas is constituted by a gas that is not available in liquid form whatever its pressure at the standard temperature of 15°C, such as liquefied natural gas (LNG) or hydrogen.

13. Apparatus according to any one of claims 5 to 7 and 10, 11, **characterised in that** the liquefied gas is constituted by liquefied petroleum gas (LPG).

14. Apparatus according to claim 13, **characterised in that** the heat exchanger system (22) has a cooling fluid passing therethrough such as propylene, a freon, an HCFC, or substances taken from the tank.

## Patentansprüche

1. Verfahren zum Kühlen von mindestens einem Speicher- oder Transportbehälter eines verflüssigten Gases, wobei durch Pumpen (18) ein Anteil dieses verflüssigten Gases in dem Behälter (10) entnommen wird und dann das so entnommene verflüssigte Gas in einem Wärmetauschsystem (22) untergekühlt wird und das so unterkühlte verflüssigte Gas selektiv in den Behälter wieder eingespritzt wird, **dadurch gekennzeichnet, daß** ein Anteil des Verdampfungsgases (16) ferner mit Unterbrechungen aus dem Behälter entnommen wird, das entnommene Verdampfungsgas in einem Kompressor (36) komprimiert wird und dieses entnommene, so komprimierte Gas in das entnommene verflüssigte Gas eingespritzt wird um einen Gemisch zu bilden, das daher vollständig verflüssigt und unterkühlt in dem Wärmeaustauschsystem ist.

2. Verfahren nach Anspruch 1, **dadurch gekennzeichnet, daß** ein Wärmetauschsystem (22) eingesetzt wird, das dafür vorgesehen ist, um ein zu kühlendes Fluid, das hauptsächlich flüssig am Eingang ist, aufzubereiten.

3. Verfahren nach Anspruch 2, **dadurch gekennzeichnet, daß** das komprimierte Flüssigkeit-/Gas-Gemisch, der in das Wärmetauschsystem (22) eingespritzt wird, einen Flüssigkeitsmolgehalt von 50% bis 100%, vorzugsweise von 70% bis 100%, aufweist.

4. Verfahren nach einem der Ansprüche 1 bis 3, **dadurch gekennzeichnet, daß** es an eine Anordnung mehrerer Behälter (10, 40) angewendet wird, daß das komprimierte Flüssigkeit-/Gas-Gemisch aus mindestens einem Tank (10) entnommen wird und, daß es, nachdem es in dem Wärmetauschsystem (22) vollständig verflüssigt und unterkühlt worden ist, in mindestens einen der Behälter (10, 40) wieder eingespritzt wird.

5. Vorrichtung zur Ausführung eines Verfahrens nach Anspruch 1, umfassend einerseits mindestens einen Behälter eines verflüssigten Gases (10, 40), das wenigstens eine flüssige Phase (LIQ 12) und eine Gasphase (BOG 16) enthält und andererseits ein Wärmetauschsystem (22), dessen Eingang mit dem Behälter, auf der Ebene seiner flüssigen Phase (LIQ 12) durch ein Pumpensystem (18) und eine Flüssigkeitsentnahmeleitung (20) kommuniziert und dessen Ausgang mit dem Behälter (10) hinter einem Durchlauf durch ein Regelventil (26) kommuniziert, **dadurch gekennzeichnet, daß** sie ferner einen Kompressor (36) umfaßt, von dem ein Eingang mit dem Behälter (10) auf der Ebene seiner Gasphase (BOG 16) kommuniziert und dessen Ausgang mit der Flüssigkeitsentnahmeleitung (20) durch ein Einspritzsystem (35) am Eingang des Wärmetauschsystems derart kommuniziert, daß ein vollständig verflüssigtes und unterkühltes Gemisch in den Behälter wieder eingeführt wird, um seinen Inhalt zu kühlen und damit die Druckanstiege zu kontrollieren.

6. Vorrichtung nach Anspruch 5, **dadurch gekennzeichnet, daß** das Wärmetauschsystem (22) einen Wärmetauscher umfaßt, der dafür vorgesehen ist, ein zu kühlendes Fluid aufzubereiten, das am Eingang hauptsächlich flüssig ist.

7. Vorrichtung nach Anspruch 6, **dadurch gekennzeichnet, daß** das Flüssigkeit/Gas-Gemisch, das in das Wärmetauschsystem (22) eingespritzt wird, einen Flüssigkeitsmolgehalt, der zwischen 50% und100%, vorzugsweise zwischen 70% und 100% liegt, aufweist.

8. Vorrichtung nach Anspruch 5, **dadurch gekennzeichnet, daß** das Wärmeaustauschsystem (22) von einem Kühlfluid wie gasförmigen Stickstoff oder Produkten, die aus dem Behälter herkommen, durchgequert wird.

9. Vorrichtung nach Anspruch 8, **dadurch gekennzeichnet, daß** das Wärmetauschsystem (22) dafür konfiguriert ist, eine Kühlung des eingespritzten, komprimierten Flüssigkeit-/Gas-Gemisches von 1°C bis 20°C, vorzugsweise von 3°C bis 17°C, zu sichern.

10. Vorrichtung nach Anspruch 5, **dadurch gekennzeichnet, daß** sie ferner eine Zwischenlagerungskapazität (30) umfaßt, die auf einer Rückflussleitung (24) des vollständig verflüssigten und unterkühlten Gemisches zum Behälter (10), zwischen dem Ausgang des Wärmetauschsystems (22) und dem Regelventil (26) angeordnet ist.

11. Vorrichtung nach Anspruch 5, **dadurch gekennzeichnet, daß** das vollständig verflüssigte und unterkühlte Gemisch aus dem Wärmetauschsystem (22) in den Behälter (10, 40), auf der Ebene seiner flüssigen Phase (LIQ 12) und / oder auf der Ebene seiner Gasphase (BOG 16), wieder eingespritzt wird.

12. Vorrichtung nach einem der Ansprüche 5 bis 11, **dadurch gekennzeichnet, daß** das verflüssigte Gas aus einem Gas besteht, das unabhängig vom Druck bei der Standardtemperatur von 15°C nicht in flüssiger Form verfügbar, wie Flüssigerdgas (LNG) oder Wasserstoff.

13. Vorrichtung nach einem der Ansprüche 5 bis 7 und 10, 11, **dadurch gekennzeichnet, daß** das verflüssigte Gas aus verflüssigtem Propangas (LPG) besteht.

14. Vorrichtung nach Anspruch 13, **dadurch gekennzeichnet, daß** das Wärmetauschsystem (22) von einem Kühlfluid, wie Propylen, Freon, HCFC oder Produkten aus dem Behälter durchgequert wird.
